# EUROPEAN PATENT APPLICATION

(11) **EP 0 687 979 A1**
(43) Date of publication of application: **20.12.1995**
(21) Application number: 95109234.5
(22) Date of filing: 14.06.1995
(51) Int. Cl.: G06F 12/12

(54) **Cache memory having lockable entries**

(30) Priority: 14.06.1994 JP 131754/94
(71) Applicant: KABUSHIKI KAISHA TOSHIBA, Kawasaki-shi, Kanagawa-ken 210 (JP)
(72) Inventor: Miyamori, Takashi, Yokohama-shi, Kanagawa-ken (JP)
(74) Representative: Lehn, Werner, Dipl.-Ing.

(57) **Abstract**

Update of lock bits L and replace bits R can be controlled by a cache control section (12) such that all block data of a plurality of block data in the same set in a cache memory section (11) of a cache memory system (10) are not locked simultaneously. Thus, at least one of block data can be refilled, so that refill process can be facilitated. Thereby, at least one block data in the same set cannot be locked, refill control of the cache memory can be simplified, miniaturization of the cache memory can be attained, and degradation of performance can be prevented.

## Description

### BACKGROUND OF THE INVENTION

### 1. Field of the Invention

The present invention relates to a cache memory used in a computer system and, more Particularly, a cache memory which employs a set associative scheme or a full associative scheme and is so controlled that particular blocks stored in the cache memory are locked not to be replaced.

### 2. Description of the Prior Art

As a microprocessor having a cache memory with a lock function therein, there has been a Fujitsu MB 86930 (Reference: "Fujitsu Semiconductor Device PROCESSOR MANUAL SPARClite User Manual MB86930"), for instance.

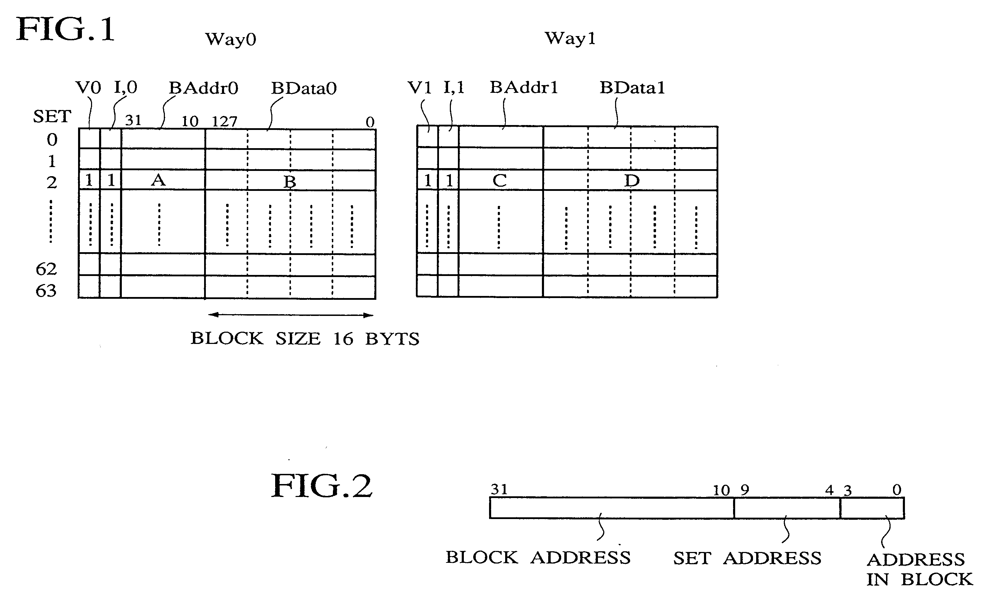

FIG.1 is a schematic view showing a configuration of a conventional cache memory having a locking function. The conventional example shown in FIG.1 is so constructed that a cache size is 2 bytes, 2-way associative scheme is employed, and a block size is 16 bytes. The number of way is 2, the number of set in each way is 64. Thus, the 2 Kbyte cache memory having the block size of 16 bytes is formed.

Valid bits V0, V1 each formed of 1 bit indicating whether data is valid or not, lock bits L0, L1 each formed of 1 bit indicating whether block data is locked or not. block addresses BADDR0, BADDR1 each formed of 22 bits, and block data BDATA0, BDATA1 each formed of 16 bytes (128 bits) are stored in every block. In addition, although not shown, replace bits for indicating replaced data are provided in the same manner as the valid bits and the lock bits.

FIG.2 is a schematic view showing an address arrangement of the conventional cache memory shown in FIG.1. In FIG.2, among 32 bit address, 6 bits ranging from 9th bit to 4th bit are used as a set address to designate a set of the cache memory. The block address BADDR0, BADDR1 in a designated set and the block address ranging from 31th bit to 10th bit are compared with each other. If both addresses coincide with each other, the cache memory is in a hit state whereas, if not, the cache memory is in a miss state. Address bits ranging from 3rd bit to 0th bit show an address in the block.

In the conventional example described above, since the lock bits are provided correspondingly to each block, sometimes two blocks in the same set are locked simultaneously. In the configuration shown in FIG.1, two blocks both having a set number 2 are locked together. (Both lock bits L0, L1 are set to 1, respectively.) In addition, data B having the block address A is stored in a way 0 whereas data D having the block address C is stored in a way 1. In this state, if data having the set address of 2 and having the block address of neither A nor C is accessed, a cache miss is caused. In this case, since both ways 0, 1 are locked, replacement of data is not effected. For this reason, missed data must be treated not to be loaded in the cache memory.

As described advance, in the conventional cache memory, there is a case where both ways in the same set are locked simultaneously. In this case, data having the set address cannot be loaded in the cache memory. Like this, there has been caused a drawback that, according to a state of the lock bits, i.e., whether data is locked or not, different replacement control of data is required in the cache memory, and thus complicated control is needed. In addition, there has been caused another drawback that, since the lock bits have to be provided in every way, hardware of a large size is needed in the cache memory.

Furthermore, logical block size can be varied by the program in some cache system. However, in such cache system, when the logical block size is expanded, sometimes data cannot be loaded in the cache memory since part of the expanded block is locked as described above. In this case, every time when data not loaded into the cache memory is mishit, data of entire expanded block size must be refilled again in the cache memory.

Consequently, there has been caused still another drawback that, since data excluding miss data are subjected to refill process together with miss data, useless refill cycles must be required, and thus performance of the memory is lowered because of process time required therefor.

### SUMMARY OF THE INVENTION

Therefore, the present invention has been made in view of the above circumstances, and an object of the present invention is to provide a cache memory wherein at least one of block data cannot be locked in the same set so that refill control of the cache memory can be simplified and miniaturization of the configuration thereof can be attained, and degradation of performance can be prevented.

In order to achieve the above object, according an aspect of the present invention, there is provided a cache memory employing a set associative scheme or a full associative scheme for managing a plurality of blocks as one set, comprising: a tag address storage area for storing tag addresses; a data storage area for storing block data corresponding to said tag addresses; a lock information storage area for storing lock information indicating whether replace of each block is inhibited or not; and a control circuit for managing said lock information in a block in connection with said lock information in other blocks in the same set such that all blocks in the same set are not simultaneously locked.

According another aspect of the present invention, there is provided a cache memory employing a set associative scheme or a full associative scheme, comprising: a memory section including a replace information storage area for storing replace information designating block data to be replaced next among a plurality block data in the same set, a lock information storage area for storing lock information designating that replacement of block data in the same set is inhibited to be held in said cache memory, a valid information storage area for storing valid information indicating whether said block data in every block is valid or not, a block address storage area for storing block addresses of block data stored in every block, and a block data storage area for storing block data of every block; a comparator for comparing said block address stored in said block address storage area of said block wherein said valid information stored in said valid information storage area of said memory section is valid with said block address input from external devices when cache access is effected, and outputs a hit signal when both address coincide with each other; and a cache control circuit for controlling update of said replace information, said lock information and said valid information such that all blocks in the same set are not simultaneously locked, on the basis of input of said replace information stored in said replace information storage area of accessed set, said lock information stored in said lock information storage area, said hit signal output from said comparator, and autolock information designating that said block data is locked in said cache memory when said cache access is effected.

Further, in the present invention, said cache memory is formed of a cache memory employing a 2-way set associative scheme, said replace information storage area of said memory section stores 1 bit information designating whether a way is to be next replaced or not in every set, said lock information storage area of said memory section stores 1 bit information designating whether either way is locked or not in every set, and said cache control circuit controls said replace information stored in said replace information storage area not to be updated in case block data in either way is locked.

Furthermore, in the present invention, said lock information storage area of said memory section stores 1 bit information designating whether a block is locked or not in every block, said cache control circuit controls update of said lock information stored in said lock information storage area such that all block data in the same set are not simultaneously locked.

According to still another aspect of the present invention, there is provided a cache memory employing a set associative scheme or a full associative scheme for managing a plurality of blocks as one set, comprising: a tag address storage area for storing tag addresses; a data storage area for storing block data corresponding to said tag addresses; a lock information storage area for storing lock information indicating whether replace of each block is inhibited or not; and a control circuit for managing said lock information in a block in accordance with states of an autolock signal and a lock bit signal at the time of access hit such that all blocks in the same set are not simultaneously locked.

In the above configuration of the present invention, all block data in the same set cannot be locked simultaneously in the same set so that at least one of block data can be refilled and thus refill process can be simplified.

### BRIEF DESCRIPTION OF THE DRAWINGS

FIG.1 is a schematic view showing a configuration of a conventional cache memory;
FIG.2 is a schematic view showing an address arrangement of the conventional cache memory shown in FIG.1;
FIG.3 is a block diagram showing a configuration of a cache memory according to a first embodiment of the present invention;
FIG.4 is a block diagram showing a circuit configuration of the cache memory in the first embodiment shown in FIG.3;
FIG.5 is a block diagram showing a circuit configuration of the cache control section in the first embodiment shown in FIG.3;
FIG.6 is a block diagram showing a circuit configuration of the combination circuit of the cache control section in the first embodiment shown in FIG.3;
FIG.7 is a view showing state transition in the cache memory section at the time of hit in the first embodiment shown in FIG.3;
FIG.8 is a view showing state transition in the cache memory section at the time of refill miss in the first embodiment shown in FIG.3;
FIG.9 is a view explaining the state transition shown in FIGS.7 and 8;
FIG.10 is a timing chart showing operation timings at the time of read hit in the first embodiment shown in FIG.3;
FIG.11 is a timing chart showing operation timings at the time of write hit in the first embodiment shown in FIG.3;
FIG.12 is a timing chart showing operation timings at the time of refill hit in the first embodiment shown in FIG.3;
FIG.13 is a timing chart showing operation timings at the time of refill miss in the first embodiment shown in FIG.3; and
FIG.14 is a block diagram showing a configuration of a cache memory according to a second embodiment of the present invention.

### DETAILED DESCRIPTION OF THE PREFERRED EMBODIMENTS

There will now be described preferred embodiments of a cache memory of the present invention hereinafter with reference to the accompanying drawings.

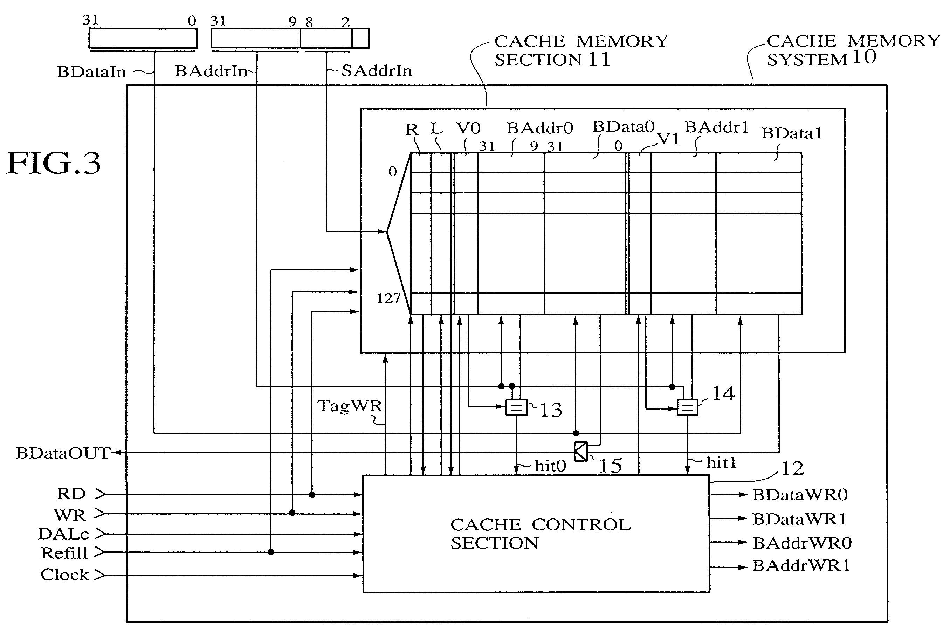

FIG.3 is a block diagram showing a configuration of a cache memory according to a first embodiment of the present invention. In FIG.3, a cache memory system 10 comprises a cache memory section 11, a cache control section 12, comparators 13, 14, and a selector 15.

The cache memory system 10 is accessed by a clock signal CLOCK, cache address signals BADDRIN and SADDRIN, a read signal RD, a write signal WR, and a refill signal REFILL all supplied from external devices. When read access is effected from the external device, the read signal RD is turned to an active state (for example, "0"). If the cache address is hit in the cache memory, data corresponding to the designated cache address is output to a block data output terminal BDATAOUT. On the other hand, when write access is effected, the write signal WR is turned to an active state of "0". If the cache address is hit in the cache memory, data supplied to a block data input terminal BDATAIN is stored in the cache memory. Then, at the time of refill access, the refill signal REFILL is turned to an active state of "0", data supplied to a block data input terminal BDATAIN is stored in the cache memory. An autolock signal DALC is a signal indicating that data is locked in the cache memory. If the block is accessed during when the autolock signal is valid (for example, "1"), the block is locked in the cache memory.

Subsequently, respective circuit blocks in the cache memory system 10 will be explained. The cache memory section 11 is so constructed that a cache size is 1 byte, 2-way associative scheme is employed, and a block size is 4 bytes. Accordingly, the number of set is 128. In case the address is 32 bits,7 bits ranging from 8th bit to 2th bit are used as a set address, and 23 bits ranging from 31th bit to 9th bit are used as a block address.

The cache memory section 11 comprises a replace bit R, a lock bit L, a valid bit V0 for the way 0, a block address BADDR0 for the way 0, a block data BDATA0 for the way 0, a valid bit V1 for the way 1, a block address BADDR1 for the way 1, a block data BDATA1 for the way 1 in every set. In other words, the way 0 is composed of 128 sets of valid bits V0, block addresses BADDR0 and block data BDATA0, whereas the way 1 is composed of 128 sets of valid bits V1, block addresses BADDR1 and block data BDATA1. A set of a replace bit R and a lock bit L are assigned to a set of a valid bit V0, a block address BADDR0 and block data BDATA0 and a set of a valid bit V1, a block address BADDR1 and block data BDATA1 to thus form one set.

The replace bit R is one bit information showing a way to be replaced subsequently. If the replace bit R is in a state of "0", for example, the way 0 will be replaced. On the contrary, if the replace bit R is in a state of "1", the way 1 will be replaced.

The lock bit L is one bit information showing that which way is locked in the set. If the lock bit L is in a state of "0", for example, both ways 0, 1 are not locked. On the other hand, if the lock bit L is in a state of "1", the way indicated by the inverted replace bit R is always locked in the cache memory. Assuming that an LRU scheme is employed as replace algorithm, for instance, the replace bit R indicates the way opposite to the latest accessed way if the lock bit L is in a state of "0" to indicate an unlock state of the set. If the lock bit L is in a state of "1" to indicate that either of the two ways of the set is in a lock state, the replace bit R always indicates the replaceable way.

The valid bit V0 in the way 0 and the valid bit V1 in the way 1 are respectively 1 bit information indicating whether or not valid data are loaded in the ways 0 and 1 respectively. After initialization of the memory, the valid bits V0, V1 are set to "1". The valid bit V0 in the way 0 and the valid bit V1 in the way 1 indicate a valid state of data respectively when they are "1", for example.

The block addresses BADDR0, BADDR1 are respectively 23 bit information indicating block addresses of the blocks stored in the ways 0, 1. The block data BDATA0 of the way 0 and the block data BDATA1 of the way 1 are respectively 4 byte (32 bit) block data stored in the ways 0 and 1.

The cache control section 12 controls the cache memory section 11 based on the read signal RD, the write signal WR, the refill signal REFILL, the clock signal CLOCK and the autolock signal DALC, all supplied from the outside of the cache memory system 10, and the replace bit R, the lock bit L, the valid bit V0 for the way 0, the valid bit V1 for the way 1, and the hit signals HIT0, HIT1, all supplied from the cache memory section 11.

The comparator 13 compares the block address input BADDRIN with the block address BADDR0 in the way 0 when the valid bit V0 in the way 0 of the accessed set is valid of "1". If they coincide with each other, the comparator 13 turns the hit signal HIT0 to a valid state of "1".

Also the comparator 14 compares the block address input BADDRIN with the block address BADDR1 in the way 1 when the valid bit V1 in the way 1 of the accessed set is a valid state of "1". If they coincide with each other, the comparator 14 turns the hit signal HIT1 to a valid state of "1".

The selector 15 outputs hit block data to the outside of the cache memory system 10 based on the hit signals HIT0 and HIT1. In other words, when the hit signal HIT0 is valid, the block data BDATA0 stored in the way 0 is output. While, when the hit signal HIT1 is valid, the block data BDATA1 stored in the way 1 is output.

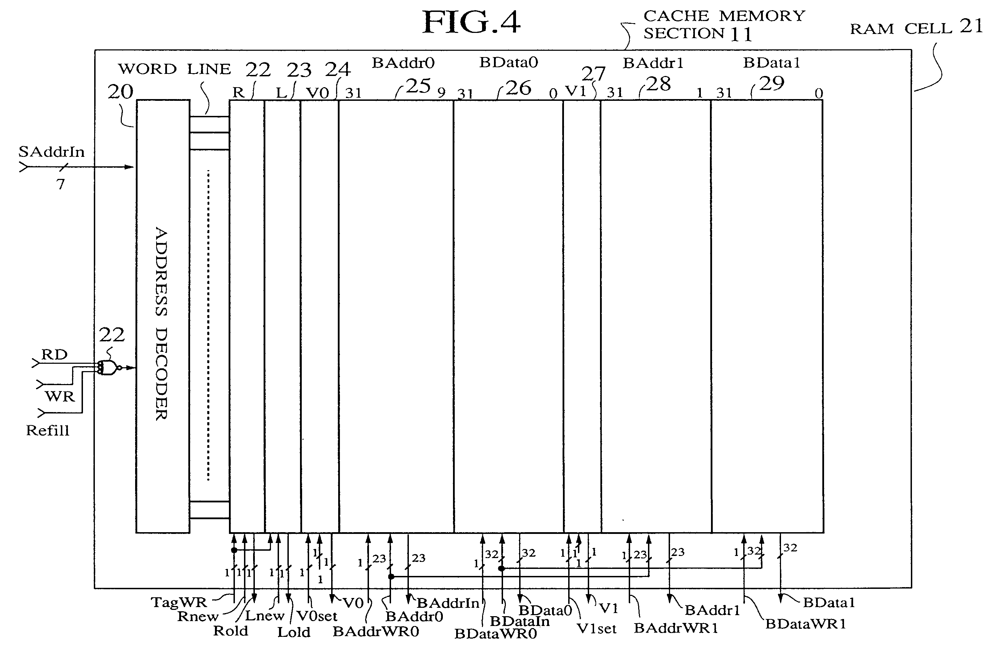

Next, with reference to FIG.4, an internal configuration of the cache memory section 11 shown in FIG.3 will be explained.

In FIG.4, the cache memory section 11 comprises an address decoder 20 and a RAM cell 21.

The set address input SADDRIN, the read signal RD, the write signal WR, and the refill signal REFILL are input to the cache memory section 11. When any one of the read signal RD, the write signal WR, and the refill signal REFILL is in an active state of "0", the gate 22 outputs an active signal. If the output signal from the gate 22 becomes active, the address decoder 20 decodes the set address input SADDRIN to make a word line in the corresponding set active.

The RAM cell 21 comprises a replace bit R cell 22, a lock bit L cell 23, a valid bit V0 cell 24 for the way 0, a block address BADDR0 cell 25 for the way 0, a block data BDATA0 cell 26 for the way 0, a valid bit V1 cell 27 for the way 1, a block address BADDR1 cell 28 for the way 1, and a block data BDATA1 cell 29 for the way 1, all of which can be written independently.

The replace bit R cell 22 comprises a RAM cell having 128 x 1 bits. If a signal TAGWR becomes "1" when the word line from the address decoder 20 is valid, the replace bit R cell 22 outputs data corresponding word to a replace bit terminal ROLD. Then, at a rise of the signal TAGWR, the replace bit input RNEW is stored into the corresponding word.

The lock bit L cell 23 comprises a RAM cell having 128 x 1 bits. If a signal TAGWR becomes "1" when the word line from the address decoder 20 is valid, the lock bit L cell 23 outputs data corresponding word to a lock bit terminal LOLD. Then, at a rise of the signal TAGWR, the lock bit input LNEW is stored into the corresponding word.

The valid bit V0 cell 24 for the way 0 comprises a RAM cell having 128 x 1 bits. If a set signal V0SET of the valid bit becomes "1" when the word line from the address decoder 20 is valid, the valid bit V0 cell 24 outputs data corresponding word to a valid bit terminal V0. Then, at a rise of the set signal V0SET of the valid bit, the input "1" is stored into the corresponding word.

The block address BADDR0 cell 25 for the way 0 comprises a RAM cell having 128 x 23 bits. If a signal BADDRWR0 becomes "1" when the word line from the address decoder 20 is valid, the block address BADDR0 cell 25 outputs data corresponding word to a block address terminal BADDR0. Then, at a rise of the signal BADDRWR0, the input BADDRIN is stored into the corresponding word.

The block data BDATA0 cell 26 for the way 0 comprises a RAM cell having 128 x 32 bits. If a signal BDATAWR0 becomes "1" when the word line from the address decoder 20 is valid, the block data BDATA0 cell 26 outputs data corresponding word to a block data terminal BDATA0. Then, at a rise of the signal BDATAWR0, the input BDATAIN is stored into the corresponding word.

The valid bit V1 cell 27 for the way 1 comprises a RAM cell having 128 x 1 bits. If a signal V1SET becomes "1" when the word line from the address decoder 20 is valid, the valid bit V1 cell 27 outputs data corresponding word to a valid bit terminal V1. Then, at a rise of the signal V1SET, the input "1" is stored into the corresponding word.

The block address BADDR1 cell 28 for the way 1 comprises a RAM cell having 128 x 23 bits. If a signal BADDRWR1 becomes "1" when the word line from the address decoder 20 is valid, the block address BADDR1 cell 28 outputs data corresponding word to a block address terminal BADDR1. Then, at a rise of the signal BADDRWR1, the input BADDRIN is stored into the corresponding word.

The block data BDATA1 cell 29 for the way 1 comprises a RAM cell having 128 x 32 bits. If a signal BDATAWR1 becomes "1" when the word line from the address decoder 20 is valid, the block data BDATA1 cell 29 outputs data corresponding word to a block data terminal BDATA1. Then, at a rise of the signal BDATAWR1, the input BDATAIN is stored into the corresponding word.

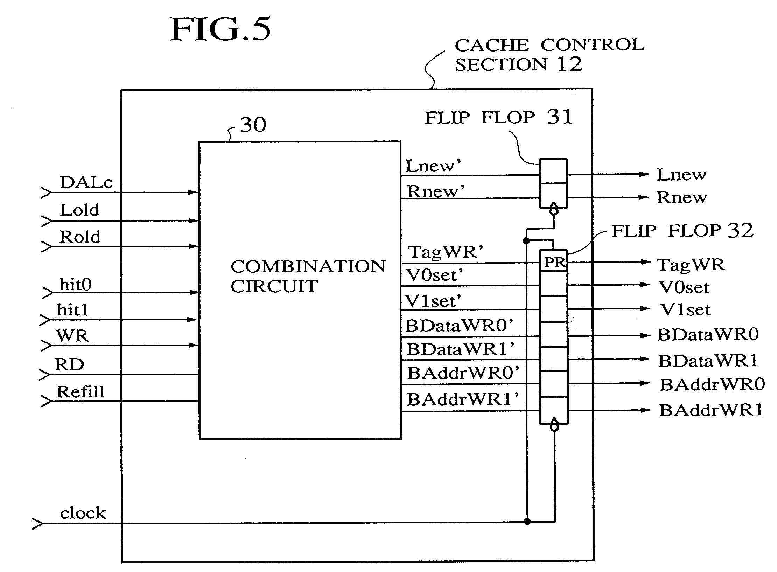

Subsequently, referring to FIG.5, an internal configuration of the cache control section 12 shown in FIG.3 will be explained.

In FIG.5, the cache control section 12 comprises a combination circuit 30 and flip-flops 31, 32.

The combination circuit 30 receives as input signals the autolock signal DALC, the read signal RD, the write signal WR, and the refill signal REFILL; the lock bit LOLD and the replace bit ROLD both supplied from the cache memory section 11; the hit signal HIT0 supplied from the comparator 13; and the hit signal HIT1 supplied from the comparator 14. Also, the combination circuit 30 outputs a lock bit LNEW' which is a new value of the cache tag, and a replace bit RNEW' to a flip flop 31, and outputs a signal TAGWR', a signal V0SET', a signal V1SET', a signal BDATAWR0', a signal BDATAWR1', a signal BADDRWR0' and a signal BADDRWR1', all of which are control signals used for updating the cache memory, to a flip flop 32.

The lock bit LNEW' and the replace bit RNEW' are latched by the flip flop 31 at a rise of the clock signal CLOCK to be output to the cache memory section 11. In addition, the signal TAGWR', the signal V0SET', the signal V1SET', the signal BDATAWR0', the signal BDATAWR1', the signal BADDRWR0' and the signal BADDRWR1' are latched by the flip flop 32, which has a preset function, at a fall of the clock signal CLOCK so as to be turned to an active state only during the latter half (at the time of "0") of the clock signal CLOCK. Theses signals are preset during the former half (at the time of "1") of the clock signal CLOCK so that outputs of these signals become an inactive state ("1").

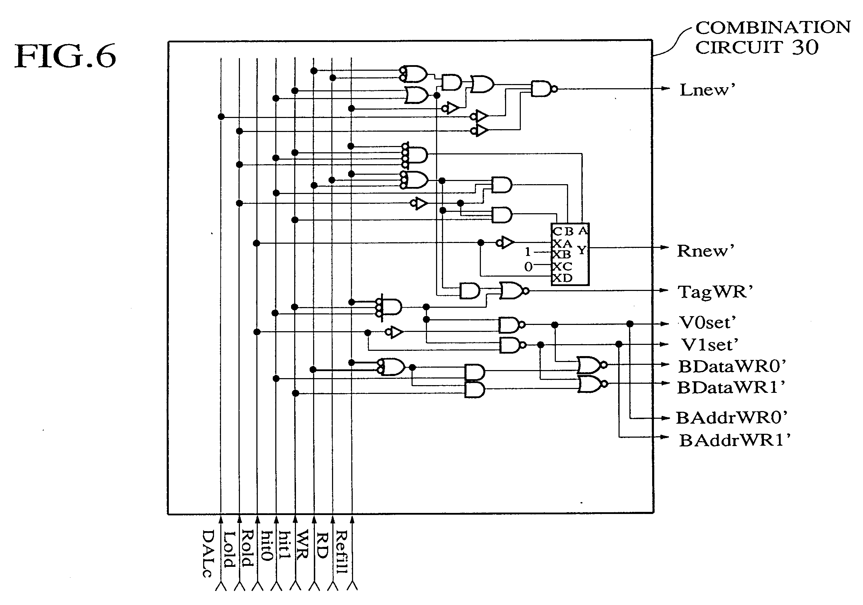

Next, with reference to FIG. 6, a configuration of the combination circuit 30 in the cache control section 12 shown in FIG.5 will be explained.

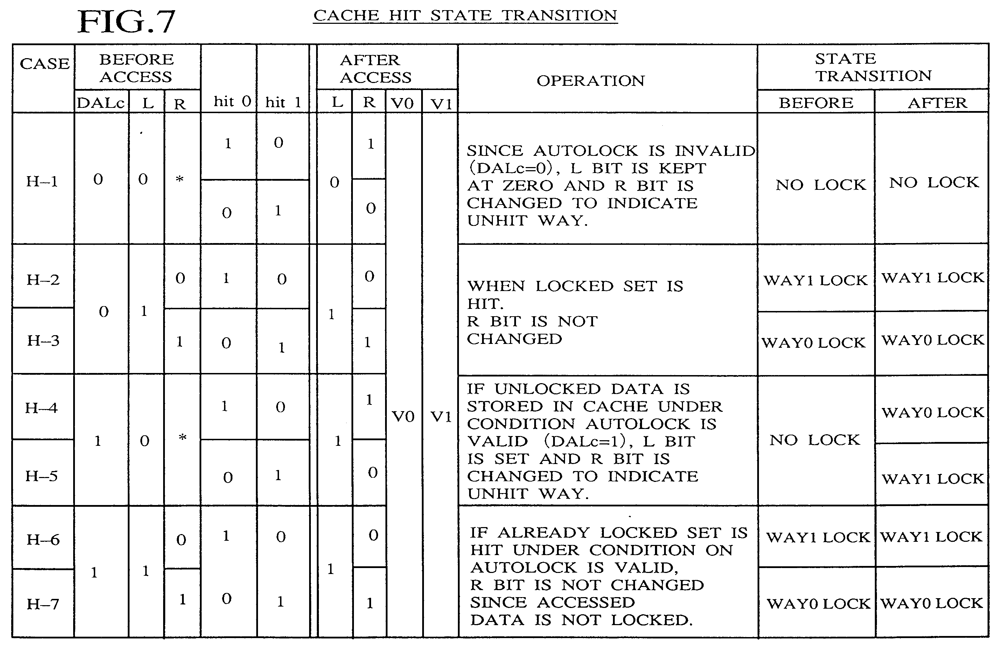

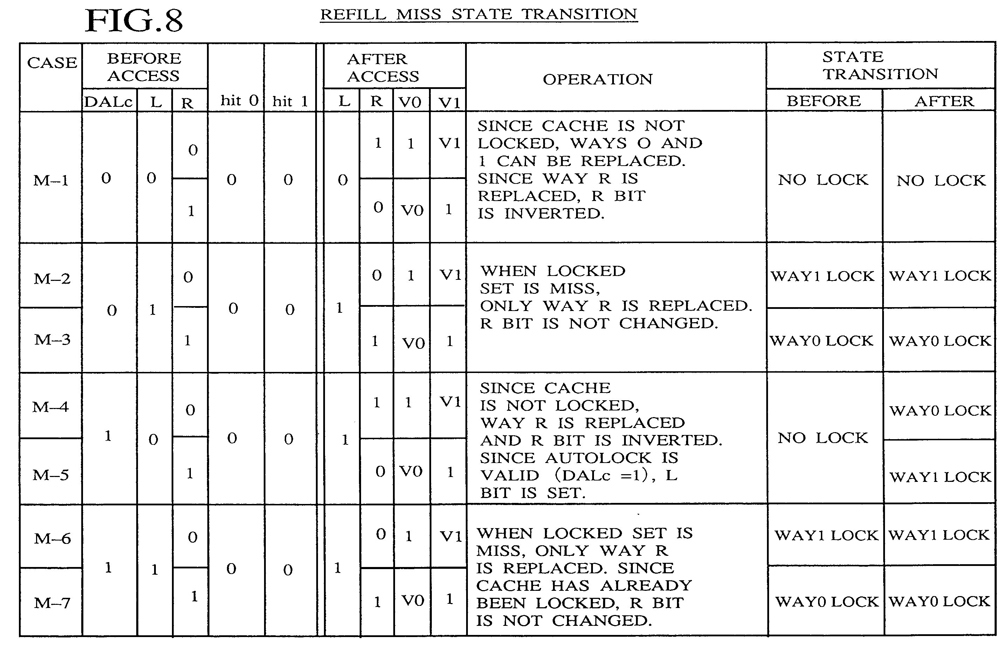

Logic of the combination circuit 30 correspond to state transition of the cache memory section 11 at the time of hit, as shown in FIG.7, and state transition of the cache memory section 11 at the time of refill miss, as shown in FIG. 8. Therefore, the followings are logical equations of the logic.
Lnew=! (((!WR || !RD) && (hit0 || hit1)) || !Refill) && !DALc && !Lold);
Rnew=(!Refill && !hit0 && !hit1 && !Lold) ? !Rold : ((!WR || !RD || !Refill) && hit0 && !Lold) ? 1 : ((!WR || !RD || !Refill) && hit1 && !Lold) ? 0 : Rold;
TagWR=! ((!WR || !RD || !Refill) && (hit0 || hit1) || (!Refill && !hit0 && !hit1);
V0set=! ((!Refill && !hit0 && !hit1) && !Rold);
V1set=! ((!Refill && !hit0 && !hit1) && Rold);
BDataWR0=!(((!Refill || !WR) && hit0) || (!Refill && !hit0 && !hit1) && !Rold);
BDataWR1=!(((!Refill || !WR) && hit1) || (!Refill && !hit0 && !hit1) && Rold);
BAddrWR0=! ((!Refill && !hit0 && !hit1) && !Rold);
BAddrWR1=! ((!Refill && !hit0 && !hit1) && Rold);
Where "!" denotes logical inversion, "||" denotes logical sum, and "&&" denotes logical product. In addition, "(logical equation)? equation A: equation B" denotes a selector which takes the equation A if the logical equation is true and takes the equation B if the logical equation is false. Based on above logical equations, a combination circuit shown in FIG.6, for example, can be formed by means of logical circuits.

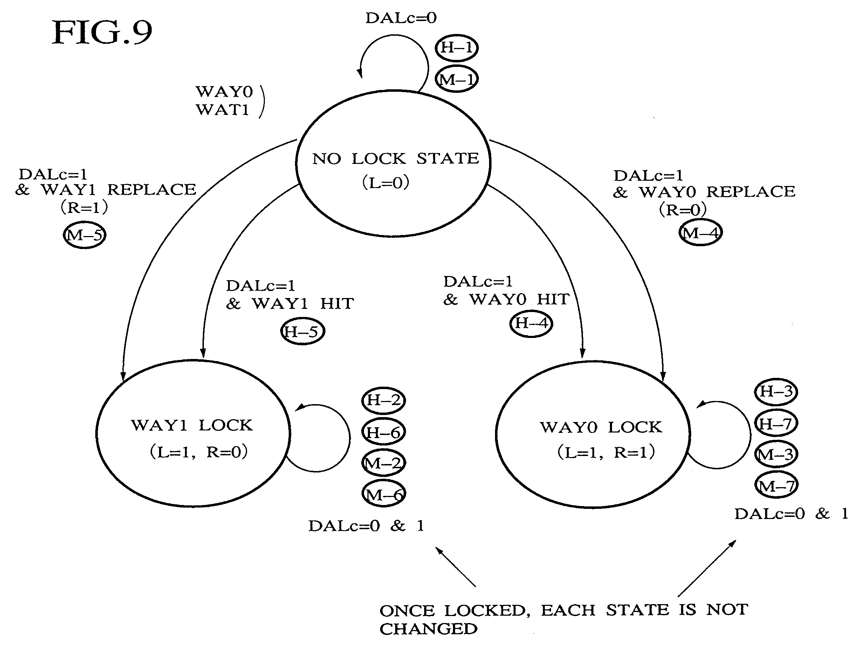

Next, with reference to FIGS.7 and 9, state transition of the cache memory section 11 caused by cache access will be explained.

As the cache memory access, reading data from the cache memory, writing data to the cache memory, and refilling data to the cache memory from the main memory after cache mishit can be considered.

First, state transition of the cache memory section 11 at the time of cache hit will be explained.

In FIG.7, in the case of read hit, write hit, or refill hit, the same state transition is caused in the cache memory section 11. Lock states of the way of the cache memory section 11 can be classified into three cases according to combinations of the lock bit L and the replace bit R.
(1) Both ways 0, 1 are in an unlock state (L=0, R don't care)
(2) Way 0 is in a lock state. (L=1, R=1 (This indicates that the way 1 is a replaced object.))
(3) Way 1 is in a lock state. (L=1, R=0 (This indicates that the way 0 is a replaced object.))
Under the condition the autolock signal DALC=1, if the cache access is hit, the cache memory changes from the unlock state to the lock state of either the way 0 or the way 1. Once the cache memory changed to the lock state of either the way 0 or the way 1, the lock state is not changed. In other words, since the way as the replaced object is not varied, the opposite way to the replaced object is always locked in the cache memory.

Four cases of the state transition shown in FIG.7 will be explained in detail hereinafter.

First, in case the autolock signal DALC is invalid ("0") and the lock bit L is invalid ("0")(i.e., the cache memory being not in the lock state)(H-1 case), when the cache memory access is hit, the replace bit R is changed after the transition so as to indicate the way which is not hit. In addition, the lock bit L still remains invalid ("0"). In other words, both ways 0, 1 remain unlock state before and after state transition.

Then, in case the autolock signal DALC is invalid ("0") and the lock bit L is valid ("1")(i.e., the cache memory being in the lock state)(H-2 case, H-3 case), when the cache memory access is hit, the replace bit R is not changed after the transition. In addition, the lock bit L still remains valid ("1"). In this case, since the block in one way has been locked not to be replaced, the replace bit R always indicates the block in the other way which is not locked, irrespective of the hit way. In other words, in case DALC=0, L=1, R=0 and the way 1 is in the lock state (H-2 case), the way 1 still remains lock state as it is after state transition and the way 0 is in the unlock state. On the other hand, in case DALC=0, L=1, R=1 and the way 0 is in the lock state (H-3 case), the way 0 still remains lock state, as it is, after state transition and the way 1 is in the unlock state.

Next, in case the autolock signal DALC is valid ("1") and the lock bit L is invalid ("0")(i.e., the cache memory being not in the lock state)(H-4 case, H-5 case), when the cache memory access is hit, the replace bit R is replaced after the transition to indicate the way which is not hit. In addition, the lock bit L is changed to the valid ("1"). Thereby, hit block is locked in the cache memory. In other words, in case DALC=0, L=0 and the way 0 is hit (H-4 case), the way 1 is changed to the lock state (L=1) after transition, and the replace bit is set to 1 (R=1). On the other hand, in case DALC=1, L=0 and the way 1 is hit (H-5 case), the way 1 is changed to the lock state (L=1) after state transition and the replace bit R is set to 0 (R=0).

Then, in case the autolock signal DALC is valid ("1") and the lock bit L is valid ("1")(i.e., the cache memory being in the lock state)(H-6 case, H-7 case), when the cache memory access is hit, data in the block which has been already locked are still locked preferentially. Therefore, since access data is not locked, the replace bit R cannot be changed. In addition, the lock bit L still remains valid ("1"). In this case, although the access is performed when the autolock signal DALC is in the valid ("1"), the block which is hit at this time is not locked in the cache memory. In other words, in case DALC=1, L=1, R=0 and the way 1 is in the lock state (H-6 case), the way 1 still remains lock state, as it is, after state transition and the way 0 is in the unlock state. The replace bit R still remains invalid (R=0). On the other hand, in case DALC=1, L=1, R=1 and the way 0 is in the lock state (H-7 case), the way 0 still remains lock state, as it is, after state transition and the way 1 is in the unlock state. The replace bit R still remains valid (R=1).

Subsequently, with reference to FIGS.8 and 9, state transition of the cache memory section 11 caused at the time of refill miss will be explained.

In FIG.8, in case the autolock signal DALC is invalid ("0") and the lock bit L is invalid ("0")(M-1 case), when the refill access is miss, the replace bit R is inverted since the way designated by the replace bit R is replaced. In addition, the lock bit L still remains invalid ("0"). The valid bit V0 or V1 in the replaced way is set.

Then, in case the autolock signal DALC is invalid ("0") and the lock bit L is valid ("1")(M-2 case, M-3 case), when the refill access is miss, the replace bit R is not changed. In addition, the lock bit L still remains valid ("1"). In this case, since the block in one way has been locked not to be replaced, the replace bit R always indicates the block in the other way which is not locked. In other words, in case the way 1 is locked (M-2 case), the way 1 still remains lock state, as it is. The replace bit R is invalid (R=0). On the other hand, in case the way 0 is locked (M-3 case), the way 0 still remains lock state, as it is, and the replace bit R is valid (R=1). In addition, the valid bit V0 or V1 in the replaced way is set.

Next, in case the autolock signal DALC is valid ("1") and the lock bit L is invalid ("0")(M-4 case, M-5 case), when the refill access is miss, the replace bit R is inverted since the way designated by the replace bit R is replaced. In addition, since the autolock signal DALC is valid, the lock bit L is changed to the valid ("1"). Thereby, the block in the replaced way is locked in the cache memory. In other words, when the way 0 is replaced, it is locked as it is (M-4 case). On the other hand, when the way 1 is replaced, it is locked as it is (M-5 case). In addition, the valid bit V0 or V1 in the replaced way is set.

Then, in case the autolock signal DALC is valid ("1") and the lock bit L is valid ("1")(M-6 case, M-7 case), when the refill access is mishit, the replace bit R is not be changed. In addition, the lock bit L still remains valid ("1") as it is. In this case, data in the block which has been already locked are still locked preferentially. Though the access is performed when the autolock signal DALC is in the valid ("1"), the block which is replaced at this time is not locked in the cache memory. In addition, the valid bit V0 or V1 in the replaced way is set.

In the case of read-miss or write-miss, there is caused no state transition in the cache memory section 11, and the previous state is hold as it is.

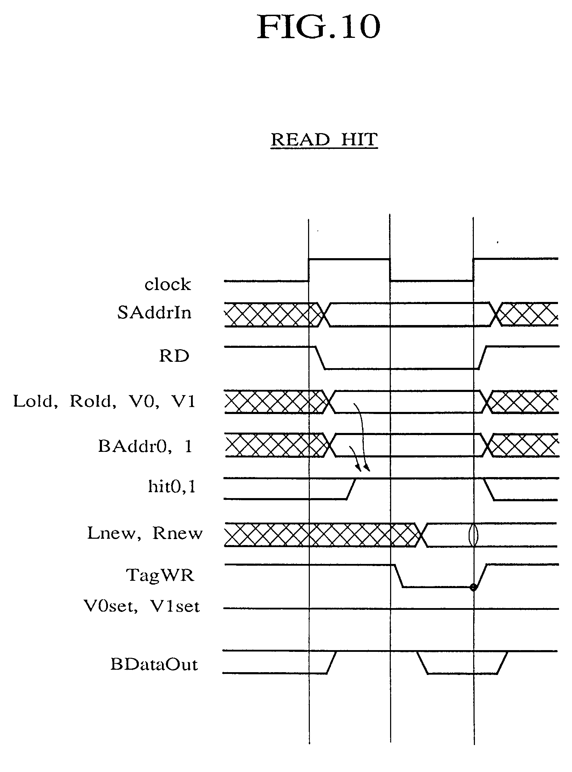

Subsequently, with reference to an operation timing chart shown in FIG.10, operation timing at the time of read hit will be explained.

In FIG.10, when the clock signal CLOCK is at "1", the lock bit LOLD (the lock bit value in a previous state is set as LOLD and the lock bit value in a next state is set as LNEW), the replace bit ROLD (the replace bit value in a previous state is set as ROLD and the replace bit value in a next state is set as RNEW), the valid bit V0 of the way 0, the valid bit V1 of the way 1, the block address BADDR0 of the way 0, and the block address BADDR1 of the set designated by the set address input SADDRIN are read out. The block address input BADDRIN and the block addresses BADDR0 and BADDR1 are compared respectively by the comparators 13 and 14. The hit signal HIT0 or HIT1 in the hit way becomes active state ("1").

The cache control section 12 outputs the lock bit LNEW and the replace bit RNEW of a next state at a fall of the clock signal CLOCK, and turns the signal TAGWR to the active state ("0") so as to control write operation of the cache memory. In addition, the cache control section 12 outputs hit data to a terminal BDATAOUT. The signal TAGWR becomes inactive ("1") at a rise of next clock signal. The values of the lock bit LNEW and the replace bit RNEW are stored in the rock bit L and the replace bit R of the accessed set at the rise of next clock signal.

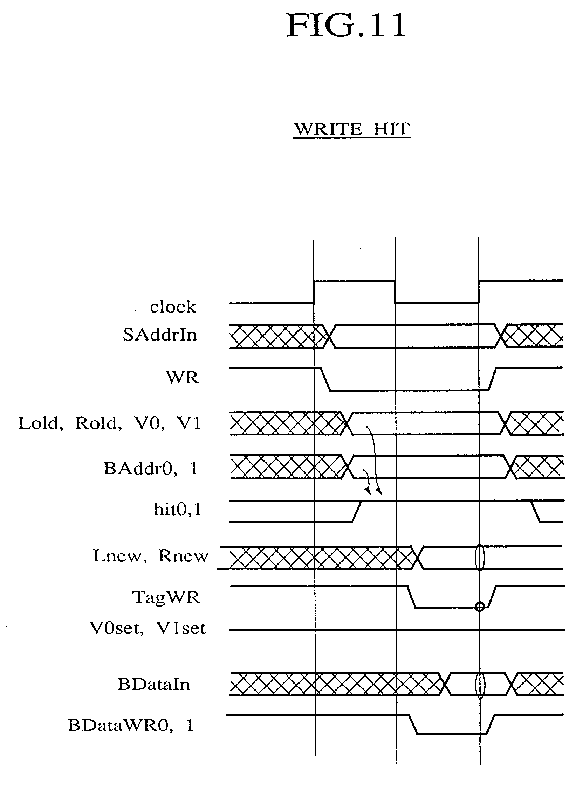

Next, with reference to an operation timing chart shown in FIG.11, operation timing at the time of write hit will be explained.

In FIG.11, when the clock signal CLOCK is at "1", the lock bit LOLD, the replace bit ROLD, the valid bit V0 of the way 0, the valid bit V1 of the way 1, the block address BADDR0 of the way 0, and the block address BADDR1 of the set designated by the set address input SADDRIN are read out. The block address input BADDRIN and the block addresses BADDR0 and BADDR1 are compared respectively by the comparators 13 and 14. The hit signal HIT0 or HIT1 in the hit way becomes active state ("1").

The cache control section 12 outputs the lock bit LNEW and the replace bit RNEW of a next state at a fall of the clock signal CLOCK, and turns the signal TAGWR to active state ("0") so as to control write operation of the cache memory. In addition, in order to write the data input BDATAIN into the hit block of the cache memory, the cache control section 12 turns the control signal BDATAWR0 or BDATAWR1 to active state ("0").

At a rise of next clock signal, the signal TAGWR, the control signal BDATAWR0 or BDATAWR1 become inactive state ("1"). The values of the lock bit LNEW and the replace bit RNEW are stored in the rock bit L and the replace bit R of the accessed set at the rise of next clock signal. In addition, at the rise of the control signal BDATAWR0 or BDATAWR1, the block data input BDATAIN is stored into the hit block data BDATA0 or BDATA1 of the cache memory.

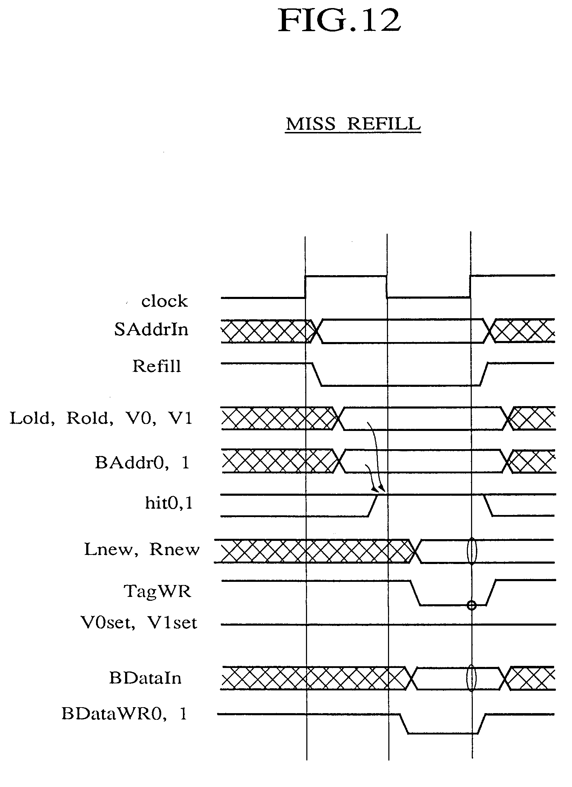

Next, with reference to an operation timing chart shown in FIG.12, operation timing at the time of refill hit will be explained.

When the clock signal CLOCK is at "1", the lock bit LOLD, the replace bit ROLD, the valid bit V0 of the way 0, the valid bit V1 of the way 1, the block address BADDR0 of the way 0, and the block address BADDR1 of the set designated by the set address input SADDRIN are read out. The block address input BADDRIN and the block addresses BADDR0 and BADDR1 are compared respectively by the comparators 13 and 14. The hit signal HIT0 or HIT1 in the hit way becomes active state ("1").

The cache control section 12 outputs the lock bit LNEW and the replace bit RNEW of a next state at a fall of the clock signal CLOCK, and turns the signal TAGWR to active state ("0") so as to control write operation of the cache memory. In addition, in order to write the data input BDATAIN into the hit block of the cache memory, the cache control section 12 turns the control signal BDATAWR0 or BDATAWR1 to active state ("0").

At a rise of next clock signal, the signal TAGWR, the control signal BDATAWR0 or BDATAWR1 become inactive state ("1"). The values of the lock bit LNEW and the replace bit RNEW are stored in the rock bit L and the replace bit R of the accessed set at the rise of next clock signal. In addition, at the rise of the control signal BDATAWR0 or BDATAWR1, the block data input BDATAIN is stored into the hit block data BDATA0 or BDATA1 of the cache memory.

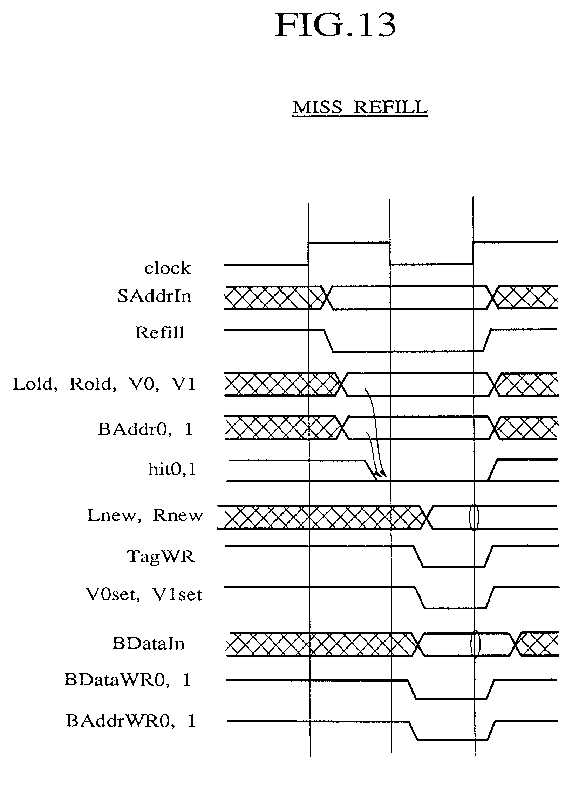

Furthermore, with reference to an operation timing chart shown in FIG.13, operation timing at the time of miss refill will be explained.

When the clock signal CLOCK is at "1", the lock bit LOLD, the replace bit ROLD, the valid bit V0 of the way 0, the valid bit V1 of the way 1, the block address BADDR0 of the way 0, and the block address BADDR1 of the set designated by the set address input SADDRIN are read out. The block address input BADDRIN and the block addresses BADDR0 and BADDR1 are compared respectively by the comparators 13 and 14. The hit signal HIT0 or HIT1 in the hit way becomes active state (1).

The cache control section 12 outputs the lock bit LNEW and the replace bit RNEW of a next state at a fall of the clock signal CLOCK, and turns the signal TAGWR to active state ("0") so as to control write operation of the cache memory. In addition, in order to write the refill data input BDATAIN into the block having the replace bit ROLD and to set the valid bit V0 or V1 of the cache memory, the cache control section 12 turns the control signal BDATAWR0 or BDATAWR1 to active state ("0"), and turns the set signal V0SET or V1SET of the valid bit to active state ("0").

At a rise of next clock signal, the signal TAGWR, the control signal BDATAWR0 or BDATAWR1, and the set signal V0SET or V1SET of the valid bit become inactive state ("1"). The values of the lock bit LNEW and the replace bit RNEW are stored in the rock bit L and the replace bit R of the accessed set at the rise of next clock signal.

In addition, at the rise of the control signal BDATAWR0 or BDATAWR1, the block data input BDATAIN is stored into the block data BDATA0 or BDATA1 of the replaced cache memory. At the rise of the set signal V0SET or V1SET of the valid bit, the valid bit V0 or V1 is set to "1".

As has been explained above, since, in the above first embodiment, at least one way of the cache memory is not locked, there is no area in the cache memory into which data cannot be loaded. Therefore, since data can be surely replaced at the time of cache miss irrespective of state of the lock bit, cache control can be facilitated.

In addition, since the necessary number of the lock bit in the cache memory can be reduced, the hardware of the memory can be reduced. For example, in the configuration of the cache memory of the first embodiment, the lock bits are required for every way in the prior art, so that 256 bits are employed. However, in the above first embodiment, only 128 bit are required as the lock bits.

Moreover, in the cache system wherein a logical block size can be varied by programming, even if the logical block size is expanded, there can be eliminated a situation where part of the expanded block cannot be loaded into the cache memory because of the lock function. Therefore, overhead for replacement can be reduced at the time of the cache miss.

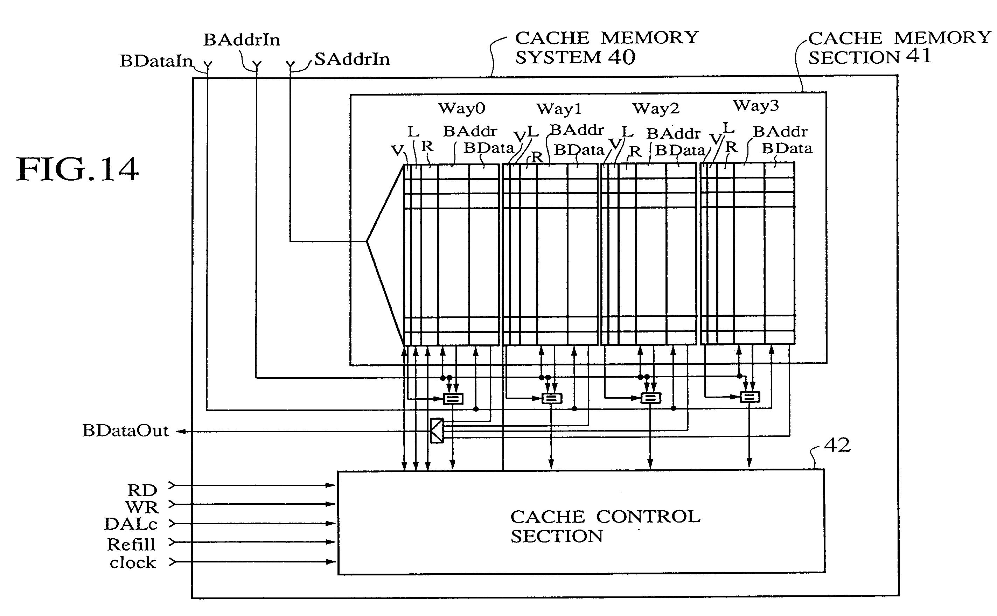

FIG.14 is a block diagram showing a configuration of a cache memory according to a second embodiment of the present invention.

The second embodiment shown in FIG.14 illustrates a configuration of the cache memory of 4-way set associative scheme.

In a cache memory system 40 according to the second embodiment, every way (way 0 to way 3) of a cache memory section 41 includes a lock bit Ln indicating whether the way is locked or not, a replace field Rn indicating a priority of the replacement, and a valid bit Vn indicating whether block data is valid or not. A cache control section 42 designates a block to be replaced next so that the block wherein the lock bit Ln is set is not replaced. If three sets are locked, update of the lock bits is controlled so as not to lock the remaining sets. In other words, the cache memory of the second embodiment is controlled based on the lock bit so as not to lock at least one set.

In the embodiments described above, a cache memory having a cache size of 1Kbyte has been explained as an example. However, the present invention is not limited to such configuration. The present invention may also be applied to a cache memory having a cache size of 512 byte, 2 Kbyte, or other size.

In addition, although the cache memory having the block size of 4 byte has been described as an example, the present invention is not limited to this configuration. The cache memory having the block size of 16 byte, 32 byte, or other size may be employed.

Moreover, although the cache memories of 2-way and 4-way associative scheme have been explained as examples, the present invention is not limited to this configuration. The cache memory having 8-way or other way may be employed, and the cache memory of a full associative scheme may be employed. In the cache memory of a full associative scheme, the cache memory area of the set associative scheme can be regarded as a single set, and lock information and replace information are set in every block.

Further, note that, although the replace bit indicates the way to be replaced next in the above, the replace bit may indicate the way not to be replaced next.

Furthermore, although the LRU scheme has been described as the replace algorithm, the present invention is not limited to this configuration. The present invention may be applied to other algorithm such as random, FIFO (First In First Out).

As has been described above, according to the present invention, update of lock information and replace information can be controlled such that all block data of a plurality of block data in the same set are not locked simultaneously. Therefore, at least one of block data is not locked, so that refill process can be surely effected. Thereby, refill process can be effected readily and quickly at the time of miss. In addition, in the cache system wherein a logical block size can be varied by programming, there can be avoided the situation where part of the expanded block is locked and cannot be refilled in the cache memory. Therefore, overhead for refill process can be reduced at the time of the cache miss.

In addition, according to the present invention, in addition to the above advantages, since the lock information can be reduced, the size of the configuration of the cache memory may be reduced.

## Claims

1. A cache memory employing a set associative scheme or a full associative scheme for managing a plurality of blocks as one set, comprising:
a tag address storage area for storing tag addresses;
a data storage area for storing block data corresponding to said tag addresses;
a lock information storage area for storing lock information indicating whether replace of each block is inhibited or not; and
a control circuit for managing said lock information in a block in connection with said lock information in other blocks in the same set such that all blocks in the same set are not simultaneously locked.

2. A cache memory according to claim 1, wherein said control circuit controls lock bits and replace bits in blocks such that all blocks in the same set are not simultaneously locked.

3. A cache memory according to claim 1, wherein said control circuit controls said lock information to have the same state transition in either one of read hit, write hit, and refill hit at the time of cache access hit.

4. A cache memory employing a set associative scheme or a full associative scheme, comprising:
a memory section including:
a replace information storage area for storing replace information designating block data to be replaced next among a plurality block data in the same set;
a lock information storage area for storing lock information designating that replacement of block data in the same set is inhibited to be held in said cache memory;
a valid information storage area for storing valid information indicating whether said block data in each block is valid or not;
a block address storage area for storing block addresses of block data stored in each block; and
a block data storage area for storing block data of each block;
a comparator for comparing said block address stored in said block address storage area of said block wherein said valid information stored in said valid information storage area of said memory section is valid with said block address input from external devices when cache access is effected, and outputs a hit signal when both address coincide with each other; and
a cache control circuit for controlling update of said replace information, said lock information and said valid information such that all blocks in the same set are not simultaneously locked, on the basis of input of said replace information stored in said replace information storage area of accessed set, said lock information stored in said lock information storage area, said hit signal output from said comparator, and autolock information designating that said block data is locked in said cache memory when said cache access is effected.

5. A cache memory according to claim 4, wherein said cache memory is formed of a cache memory employing a 2-way set associative scheme,
said replace information storage area of said memory section stores 1 bit information designating whether a way is to be next replaced or not in every set,
said lock information storage area of said memory section stores 1 bit information designating whether either way is locked or not in every set, and
said cache control circuit controls said replace information stored in said replace information storage area not to be updated in case block data in either way is locked.

6. A cache memory according to claim 4, wherein said lock information storage area of said memory section stores 1 bit information designating whether a block is locked or not in every block,
said cache control circuit controls update of said lock information stored in said lock information storage area such that all block data in the same set are not simultaneously locked.

7. A cache memory according to claim 4, wherein said control circuit controls said lock information to have the same state transition in either one of read hit, write hit, and refill hit at the time of cache access hit.

8. A cache memory employing a set associative scheme or a full associative scheme for managing a plurality of blocks as one set, comprising:
a tag address storage area for storing tag addresses;
a data storage area for storing block data corresponding to said tag addresses;
a lock information storage area for storing lock information indicating whether replace of each block is inhibited or not; and
a control circuit for managing said lock information in a block in accordance with states of an autolock signal and a lock bit signal at the time of access hit such that all blocks in the same set are not simultaneously locked.

9. A cache memory according to claim 8, wherein said control circuit controls said lock information to have the same state transition in either one of read hit, write hit, and refill hit at the time of cache access hit.
